# EUROPÄISCHE PATENTANMELDUNG

(11) **EP 1 375 110 A2**
(43) Veröffentlichungstag der Anmeldung: **02.01.2004**
(21) Anmeldenummer: 03012967.0
(22) Anmeldetag: 07.06.2003
(51) Int. Cl.: B29C 53/06, B60R 13/02

(54) **Verfahren und Vorrichtung zum Herstellen des freien Randes eines selbsttragenden, dünnwandigen Formteiles**

(30) Priorität: 18.06.2002 CZ 20022129
(71) Anmelder: R+S Technik GmbH, 63073 Offenbach am Main (DE)
(72) Erfinder: Spengler, Ernst Maximilian, 63150 Heusenstamm-Rembrücken (DE)
(74) Vertreter: Schieferdecker, Lutz, Dipl.-Ing.

(57) **Zusammenfassung**

Die Erfindung betrifft ein Verfahren und eine Vorrichtung zum Herstellen des freien Randes eines selbsttragenden, dünnwandigen Formteiles und insbesondere eines durch Warmumformung herstellbaren, mehrlagigen Innenverkleidungsteiles für Kraftfahrzeuge, wobei die Randgestaltung durch Abwinkeln und/oder durch Umbördeln von mindestens einem Randteil eines nahezu fertiggestellten Formteiles/Formteil-Rohlings erfolgt.

Der Kern der Erfindung besteht darin, daß der Querschnitt des Werkstoffes (106 ) des Formteil- Rohlings ( 102, 104 ) zunächst im randnahen Bereich zur Bildung von mindestens einem Randteil ( 101, 103 ) linienförmig mit Hilfe von Wärme verringert wird und daß das Randteil (101, 103 ) sodann längs 'mindestens einer schmalen, linienförmigen Schwächungszone (107, 108, 109), /Biegelinie mindestens einmal mechanisch abgewinkelt und schließlich durch Entziehen von Wärme fixiert wird.

## Beschreibung

Die Erfindung betrifft ein Verfahren und eine Vorrichtung zum Herstellen des freien Randes eines selbsttragenden, dünnwandigen Formteiles und insbesondere eines durch Warmumformung herstellbaren, mehrlagigen Innenverkleidungsteiles für Kraftfahrzeuge, wobei die Randgestaltung durch Abwinkeln und/oder durch Umbördeln von mindestens einem Randteil eines nahezu fertiggestellten Formteiles/Formteil-Rohlings erfolgt.

Verfahren und Vorrichtungen der hier interessierenden Art sind grundsätzlich bekannt. So beschreibt die DE 9407177 üi eine mit elektrischem Strom und Hochfrequenz arbeitende, zum Erhitzen dienende Vorrichtung, mit deren Hilfe ein Bindemittel zum Ankleben von umgebördelten Randteilen an einem Basisteil aktiviert wird. Das Umbiegen erfolgt zuvor mechanisch.

Auch ist die Verwendung von Hochfrequenzelektroden aus der DE 3522878 A1 bekannt, wobei ebenfalls Bindemittel zum Fixieren der mechanisch abgebogenen Randteile verwendet wird.

Ferner ist die Verwendung von Wärmestrahlern bekannt, die auf die Rückseite des Formteiles gerichtet sind. Das eigentliche Umbiegen erfolgt bei dieser Vorrichtung gemäß DE 9420596 mit Hilfe eines grundsätzlich bekannten Biegelineals.

Auch die Schmelzfähigkeit der Trageschicht von mehrlagigen, thermoplastischen Kunststoff enthaltenden Formteilen, wie zum Beispiel von Polyesterfasern, wird zum Fixieren der Randteile ohne Verwendung von zusätzlichen Klebestoffen benutzt. So wird gemäß DE 29507067 U1 ein nach dem Umbiegen zu fixierendes Randteil zum Beispiel mit Heizluft erwärmt oder es erfolgt zusätzlich die Verklebung der mechanisch umgebogenen Randteile gemäß DE 4041934 A1 mit Klebstoff.

Die oben zitierten Verfahren und Vorrichtungen arbeiten mit einem hohen Ernergieaufwand. Sofern Randteile beim Umbördeln verpresst werden, besteht außerdem die Gefahr, daß die freien Ränder des fertiggestellten Formteiles sehr steif sind. Auch werden häufig große Biegeradien benötigt.

Ferner führen die Besonderheiten der genannten Verfahren und Vorrichtungen dazu, daß häufig Beschränkungen bei der Auswahl von Dekorstoffen notwendig sind. So sind zum Beispiel Werkstoffe mit einer besonderen Oberflächentextur ungeeignet, weil dort Störungen beim Verpressen auftreten.

Auch die Qualität der umgebördelten Ränder läßt häufig zu wünschen übrig.

Der Erfindung liegt daher die Aufgabe zugrunde, ein Verfahren und eine Vorrichtung zu ihrer Durchführung zu schaffen, mit deren Hilfe es möglich ist, Randteile von Formteil-Rohlingen derart umzubiegen, daß sie höchsten Qualitätsansprüchen gerecht werden und ein Abwinkeln oder Umbördeln längs der gesamten Randkontur möglich ist.

Zur Lösung dieser Aufgabe sieht die Erfindung vor, daß der Querschnitt des Werkstoffes des Formteil-Rohlings zur Bildung von mindestens einem Randteil zunächst im randnahen Bereich linien- oder rillenförmig mit Hilfe von Wärme verringert wird und daß das Randteil sodann längs der Biegelinie mechanisch abgewinkelt und schließlich durch Entziehen von Wärme fixiert wird.

Das Abwinkeln und/oder Umbördeln von Randteilen von nahezu fertiggestellten Formteilen zur Herstellung von passgenauen Rändern mit einem optisch einwandfreien Aussehen erfolgt in einer den Formteil-Rohling aufnehmenden Form. Dort wird er mit einem bewegbaren Halter zunächst lagegenau festgehalten, woraufhin eine flmscharnierähnliche, linien- bzw. rillenförmige Schwächungszone als Biegelinie im Werkstoff zur Bildung eines abwinkelbaren oder umbördelbaren Randteiles erzeugt wird. Geschaffen wird die Schwächungszone bzw. Schwächungslinie vorzugsweise mit Hilfe von einer oder mehreren, elektrisch beheizbaren Prägeelektroden, die den Werkstoff in der Schwächungszone linienförmig entfernen bzw. wegschmelzen oder verdrängen, so daß mindestens eine zum Beispiel im Querschnitt keilförmige Rille bzw. ein Kanal entstehen. Das streifenförmige Randstück wird sodann mit Hilfe eines Drückelementes mechanisch in eine Endlage gedrückt bzw. umgelegt oder umgebördelt, wobei die Begrenzungsflächen des/der Kanäle in Kontakt miteinander gelangen und zweckmäßigerweise auch aufgrund ihrer ausreichend erhöhten Temperatur miteinander verschmelzen. Zeitgenau wird Wärme der Abknickstelle bzw. dem Randbereich entzogen, so daß eine Fixierung des Randteiles bzw. der Randteile , in der abgewinkelten oder umgebördelten Lage erfolgt.

In Weiterbildung der Erfindung ist es möglich, mit Hilfe von linienförmigen Schwächungszonen nicht nur ein Randteil zu erzeugen, sondern parallel zueinander zwei streifenförmige Randteile. Beide streifenförmige Randteile können beispielsweise zu den jeweils benachbarten Teilen um 90 Grad umgebogen bzw. abgewinkelt und in dieser Lage fixiert werden, so daß das freie Randteil um 180 Grad abgewinkelt ist und der eigentliche Rand des fertiggestellten Formteiles von dem ersten oder Zwischenrandteil gebildet wird.

Weitere Merkmale der Erfindung gehen aus Unteransprüchen und der Beschreibung im Zusammenhang mit der Zeichnung hervor.

Die Erfindung wird nachstehend anhand von Ausführungsbeispielen, die in der Zeichnung dargestellt sind, näher beschrieben. Dabei zeigen:
- Fig. 1:: eine Draufsicht auf eine Vorrichtung zum Abwinkeln und/oder Umbördeln von Randteilen eines FormteilRohlings;

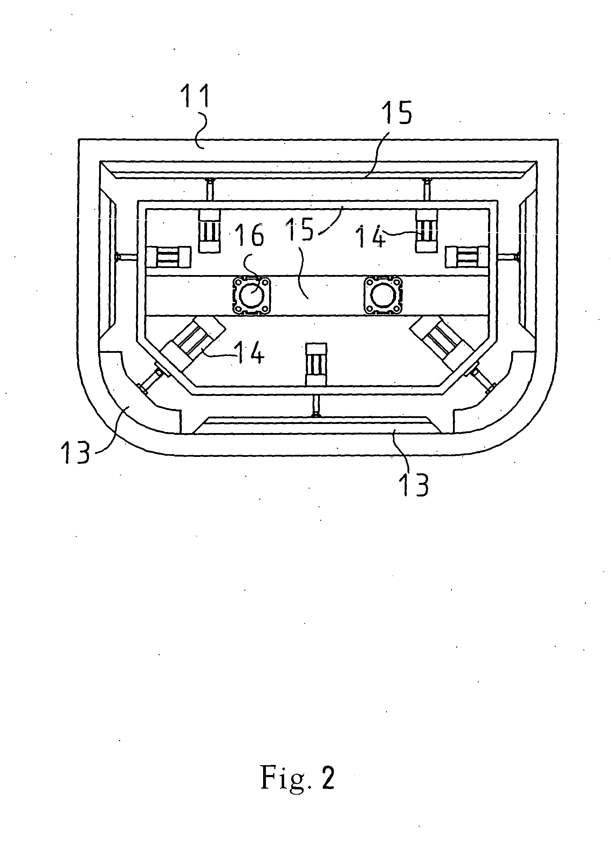

- Fig. 2:: eine Draufsicht auf eine Herstellungsform und auf bewegbare Halter zum Fixieren des Formteil-Rohlings während des Umformvorganges;
- Fig.3:: im größeren Maßstab sowie abgeschnitten eine Seitenansicht von wesentlichen und jeweils eine Baueinheit bildenden Maschinenkomponenten für den Umformvorgang;
- Fig. 4 bis 11:: Ansichten ähnlich der von Fig. 3 mit den Maschinenkomponenten in verschiedenen Arbeitspositionen;
- Fig. 12a bis 12 d:: in größerem Maßstab sowie schematisch Darstellungen eines zum Umbördeln des freien Randteiles dienenden Drückwerkzeuges in Gestalt eines Schiebers und eines Gegenwerkzeuges sowie eines zwei Biegelinien erzeugendes Prägewerkzeuges;
- Fig. 13 a bis 13 c:: Darstellungen wie in den Fig. 12 a bis 12 d eines eine einzige Biegelinie erzeugenden Prägewerkzeuges und des zugehörigen Drückwerkzeuges in Gestalt eines Schiebers und eines Gegenwerkzeuges;
- Fig. 14:: in nochmals größerem Maßstab eine Seitenansicht des Prägewerkzeuges gemäß Fig. 13 b;
- Fig. 15:: in ebenfalls größerem Maßstab eine Seitenansicht des Prägewerkzeuges gemäß Fig. 12 b;
- Fig. 16:: ebenfalls in größerem Maßstab eine Seitenansicht des als Schieber dienenden Drückwerkzeuges gemäß den Fig. 13 a bis 13 c und
- Fig. 17:: eine perspektivische Teilansicht eines Formteil-Rohlings mit einem bogenförmigen Randteil vor dem Umbördeln.

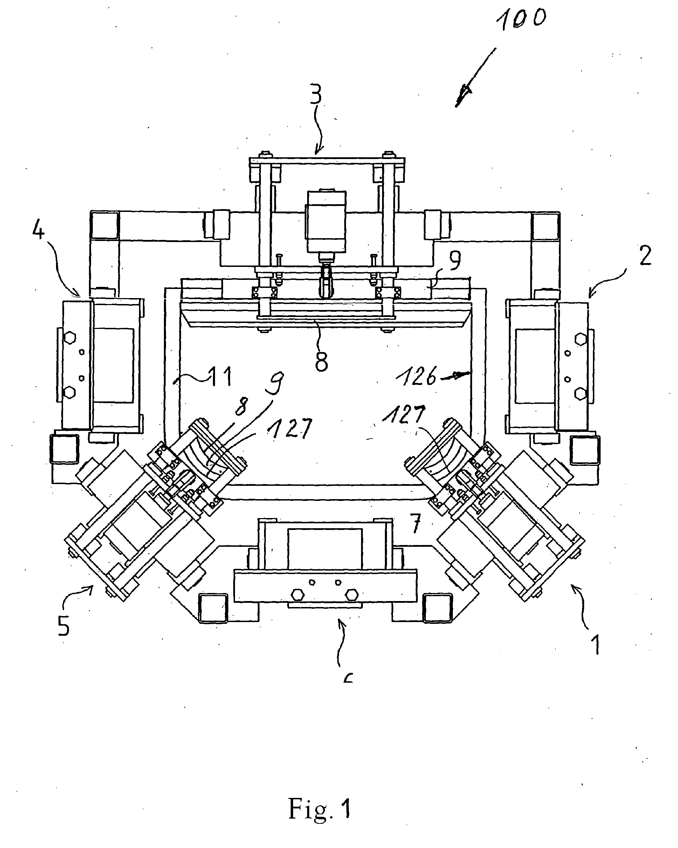

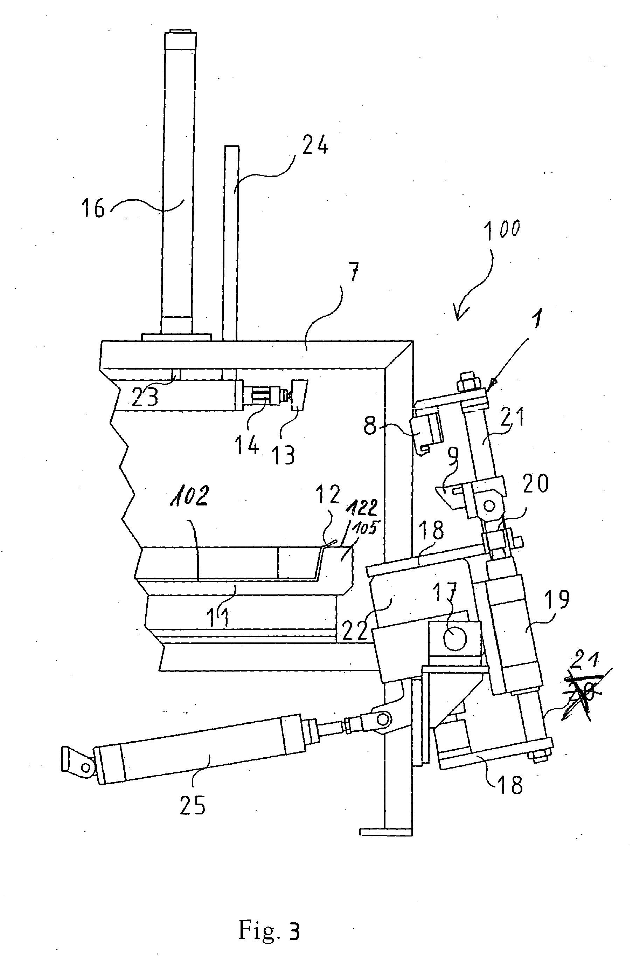

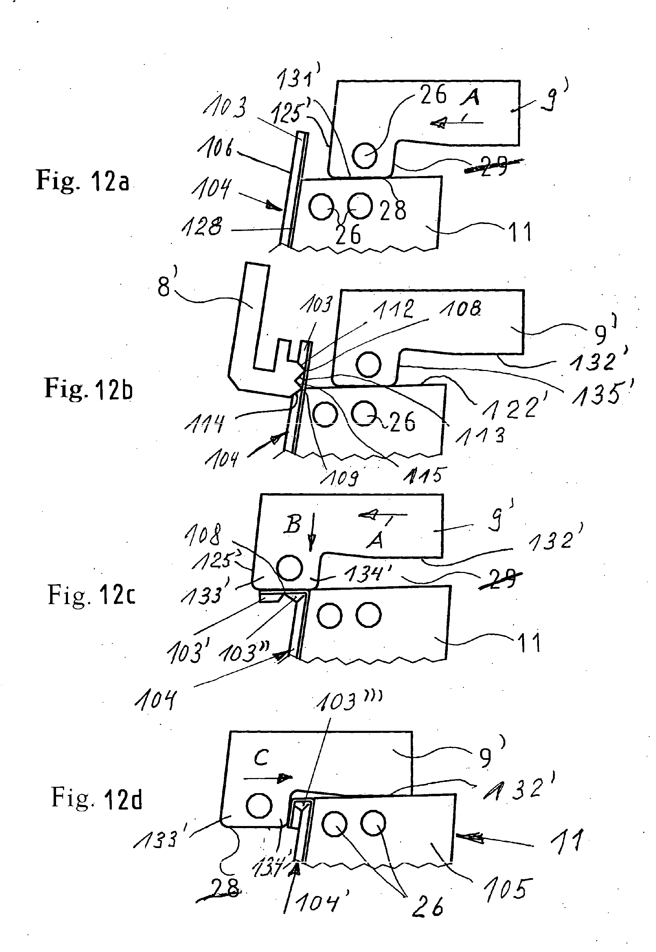

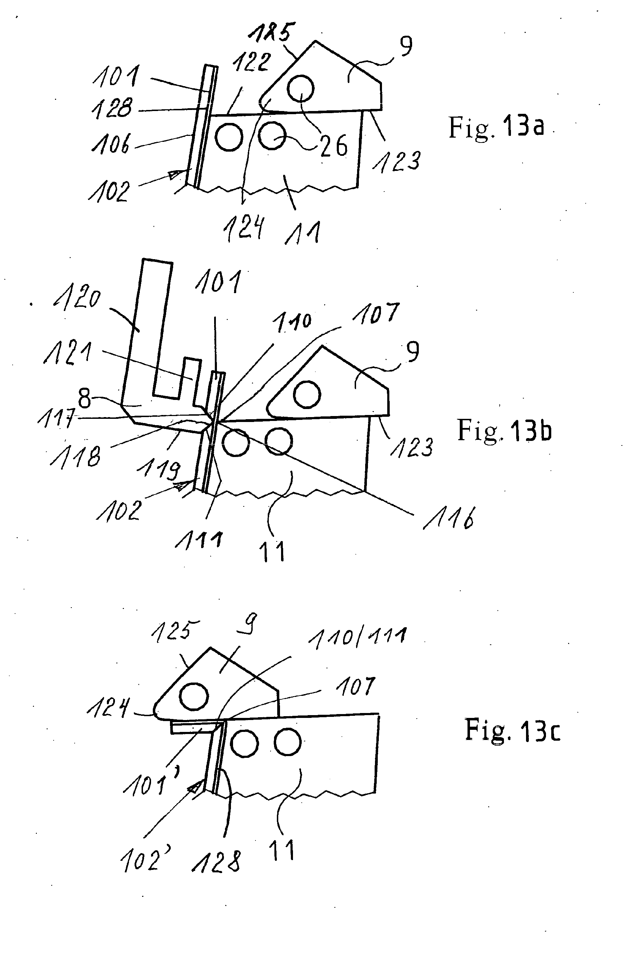

Eine Vorrichtung 100 zum Umbiegen bzw. Abwinkeln eines Randteiles 101 eines Formteil-Rohlings 102 gemäß dem in den Fig. 13 a bis 13 d dargestellten Ausführungsbeispiel oder zum Umbördeln eines Randteiles 103 eines Formteil-Rohlings 104 gemäß dem in den Fig. 12 a bis 12 d dargestellten Ausführungsbeispiel derart, daß im ersten Fall das Formteil Fig. 102' ( Fig. 13 c ) einen abgewinkelten Rand 101`und im zweiten Fall das Formteil 104 `(Fig. 12 d ) einen umgebördelten, aus zwei streifenförmigen Randstücken 103' und 103``(Fig. 12 c ) bestehenden Rand 103```aufweist, umfaßt Biegeeinheiten 1 bis 6 ( Fig. 1 ). Die Biegeeinheiten 1 bis 6 sind in einem Maschinenrahmen bzw. Maschinengestell 7 bewegbar angeordnet. In ihrer Ruheposition ( Fig. 3 ) befinden sie sich außerhalb einer den Formteil-Rohling 102/104 tragenden Form 11 ( Fig. 3 ), die ebenfalls in dem Maschinengestell 7 angeordnet ist. Der Rand 105 der Form 11, an dem der Formteil-Rohling 102 bzw. 104 während der Randbearbeitung anliegt, dient zugleich als Gegenwerkzeug für beheizbare Elemente 8 und für Drückelemente 9. Diese Elemente 8 und 9 sind an den Biegeeinheiten 1 bis 6 angeordnet und dazu vorgesehen, um unmittelbar die abgewinkelten bzw. umgebördelten Ränder 101` bzw. 103``` der Formteile 102`(Fig. 13 c ) bzw. 104` ( Fig. 12 d) herzustellen..

Sofern zwei oder mehr Biegeeinheiten vorgesehen sind, arbeiten jeweils benachbarte Biegeeinheiten abwechselnd bzw. entsprechend in Gruppen, damit sie sich nicht gegenseitig beeinträchtigen.

Zur Bearbeitung seines freien Randes 12 wird der Formteil-Rohling 102 oder 104 zunächst in der Form 11 mit Hilfe eines oder mehrerer, bewegbarer Halter 13 fixiert (Fig. 3 bis 5). Gemäß dem in Fig. 3 dargestellten Ausführungsbeispiel sind ein erster Antrieb 14 und ein zweiter Antrieb 16 für den Halter 13 vorgesehen und bewegen ihn in vertikaler bzw. horizontaler Richtung bis zur Anlage innen an dem Formteil-Rohling 102. Beide Antriebe 14 und 16 sind vorzugsweise pneumatische Antriebe. Der Antrieb 16 hebt und senkt mit seiner Kolbenstange 23 einen Tragrahmen 15, an dem sich die die Halter 13 unmittelbar bewegenden Antriebe 14 befinden. Ferner ist mindestens eine Führungsstange 24 zur Führung des Tragrahmens 15 vorgesehen.

Alle zum Abwinkeln bzw. zum Umbördeln dienenden Maschinenteile, nämlich die bewegbaren und beheizbaren Elemente 8 sowie die bewegbaren Drückelemente 9 und ihre Antriebe sind jeweils in den Biegeeinheiten 1 bis 6 zusammengefaßt, wie dies aus den Fig. 3 bis 11 anhand der Biegeeinheit 1 hervorgeht.

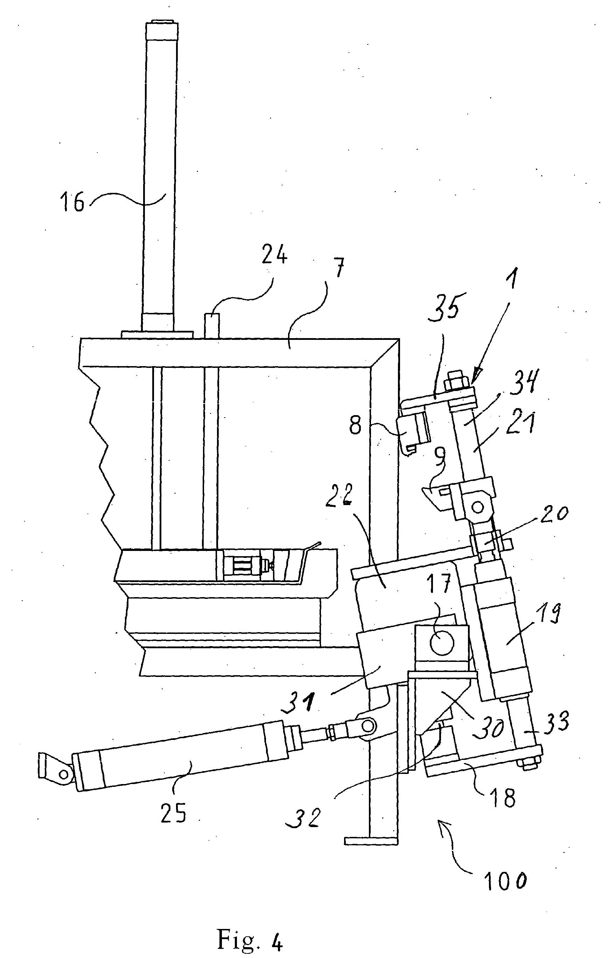

Die Biegeeinheit 1 ist mit Hilfe einer Konsole 30 (Fig. 4) an dem Maschinenrahmen 7 um eine Achse 17 schwenkbar gelagert. Als Schwenkantrieb 25 dient gemäß Ausführungsbeispiel eine Kolben-Zylindereinrichtung. Sie greift an einem Träger 31 an, der unmittelbar auf der Achse 17 sitzt.

An dem Träger 31 sind ein Linearantrieb 19 zum Bewegen des Drückelementes 9 und ein Linearantriebe 22 zum Bewegen des beheizbaren Elementes 8 angeordnet. Beide Linearantriebe 19 und 22 sind zweckmäßigerweise pneumatische Antriebe.

Eine Kolbenstange 20 des Linearantriebes 19 beaufschlagt und bewegt das Drückelement 9 unmittelbar (Fig. 3 ), während der Linearantrieb 22 gemäß Ausführungsbeispiel in einer anderen Ebene wirksam ist als das beheizbare Element 8. Der Linearantrieb 22 beaufschlagt daher zunächst unmittelbar ein kolbenstangen- oder schubstangenähnliches Verbindungselement 32 und ein quer zu dem Verbindungselement 32 angeordnetes Verbindungselement 18. Das Verbindungselement 18 kann plattenförmig sein.

Zwei in Längsrichtung verschiebbar in der Biegeeinheit 1 gelagerte, im Abstand voneinander sowie parallel zueinander angeordnete Schubstangen 21 sind mit ihrem einen Ende 33 an dem plattenförmigen Verbindungselement 18 befestigt und tagen an ihrem anderen Ende 34 das beheizbare Element 8. Das beheizbare Element 8 ist mit Hilfe eines Abstandhalters 35 an den Enden 34 der Schubstangen 21 befestigt.

Es liegt schließlich auf der Hand, daß sowohl das beheizbare Element 8 als auch das Drückelement 9 eine überwiegend längliche Form und Gestalt besitzen, wie dies auch aus Fig. 1 hervorgeht.

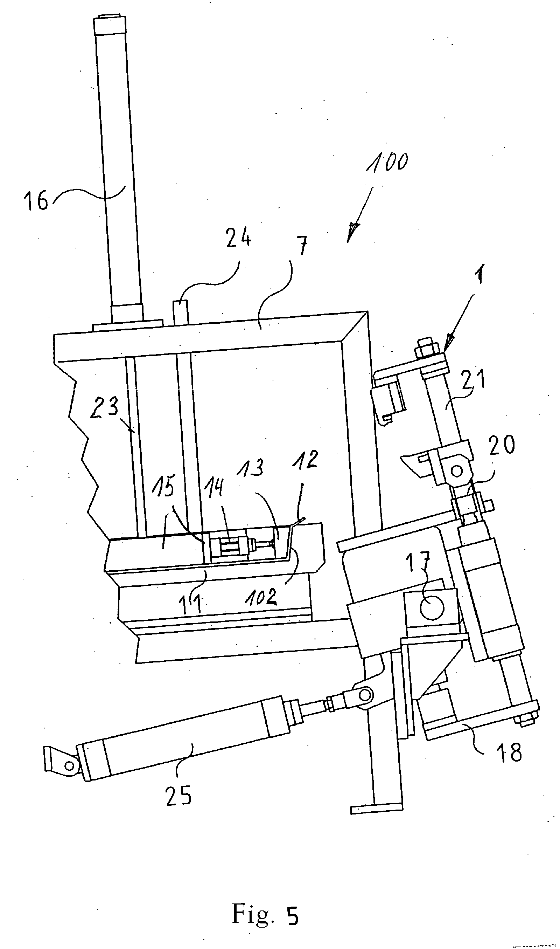

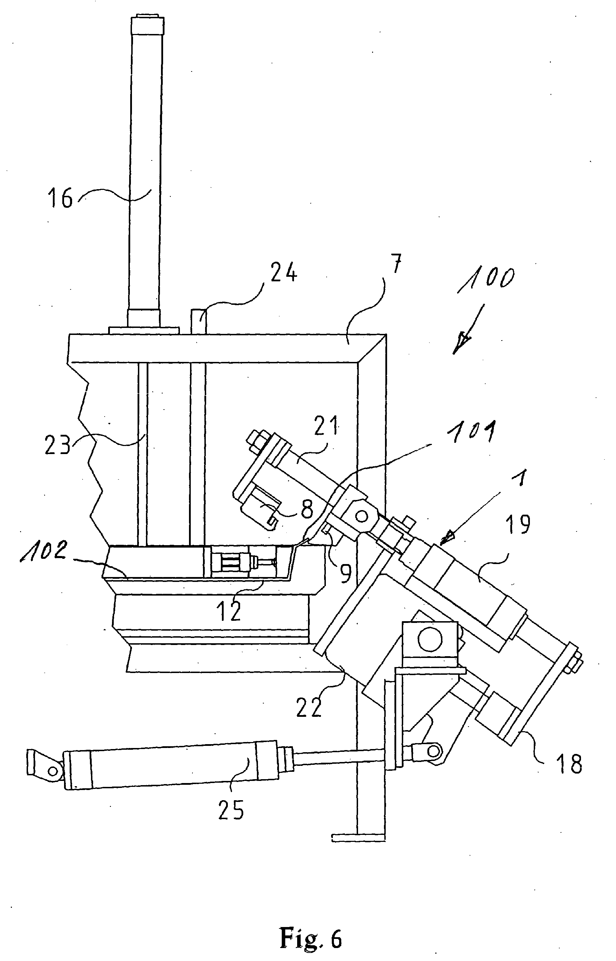

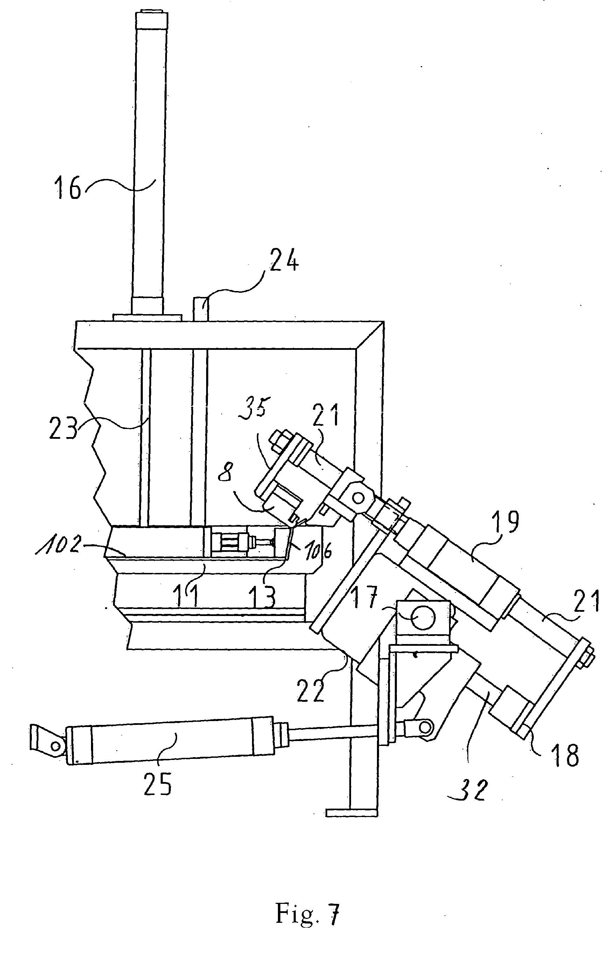

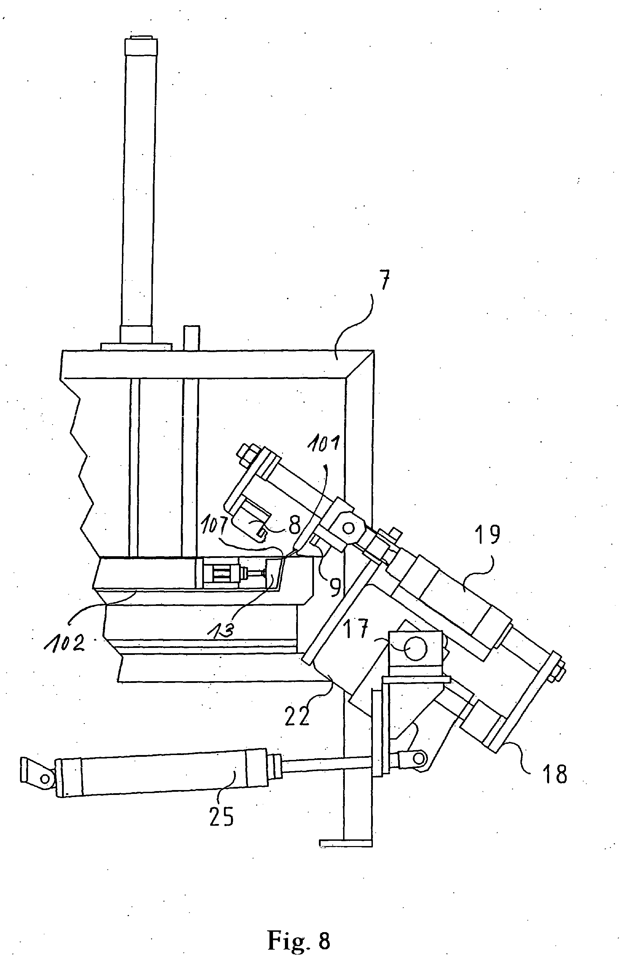

Die Funktion und Arbeitsweise der Vorrichtung 100 ist wie folgt:
Sobald der bzw. die Halter 13 den Formteil-Rohling 102, auf den der Einfachheit halber nachstehend ausschließlich Bezug genommen wird, in der Form 11 fixiert haben, schwenkt die Biegeeinheit 1 aus ihrer Ruheposition gemäß Fig. 5 um die Achse 17 in eine Arbeitsposition gemäß Fig. 6. Das beheizbare Element 8 befindet sich jetzt in geringem Abstand von dem Randteil 101 des Formteil-Rohlings 102. Daraufhin wird der Linearantrieb 22 aktiviert und bewegt über das kolbenstangenähnliche Verbindungselement 32, das plattenförmige Verbindungselement 18 und die Schubstangen 21 sowie den Abstandhalter 35 das beheizbare Element 8 gegen die Werkstoff 106 des Formteil-Rohlings 102 zur Erzeugung einer linien- bzw. kanalförmigen Schwächungszone 107 an der gewünschten Stelle (Fig. 7 und 13 b). Nach Herstellung der Schwächungszone 107 wird das beheizbare Element 8 wieder in die in Fig. 6 dargestellte Position entsprechend Fig. 8 zurückbewegt, während gleichzeitig das schieberartige Drückelement 9 am Randteil 101 gemäß Fig. 8 anliegt, um nunmehr wirksam zu werden.

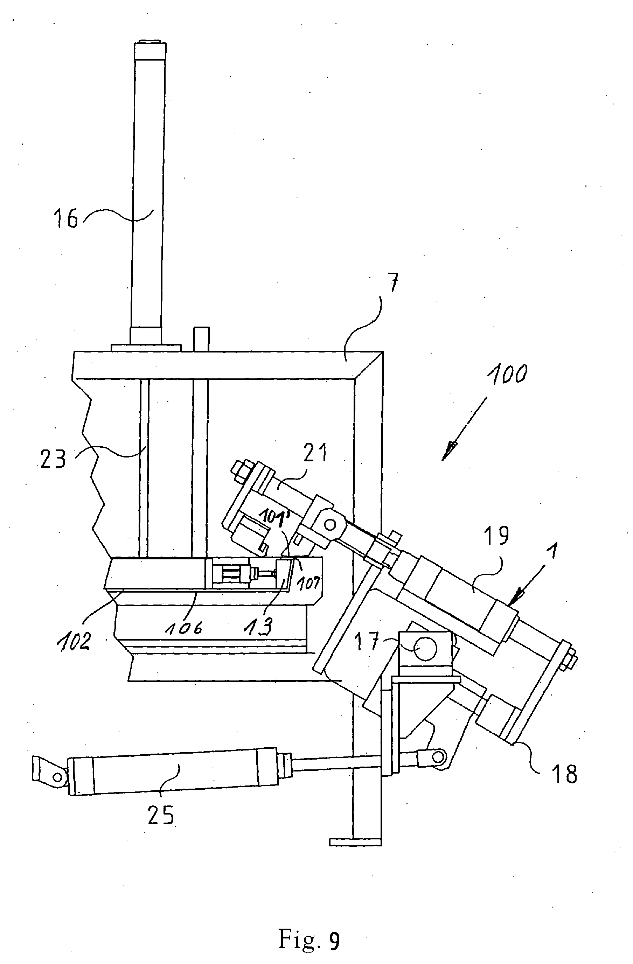

Das Drückelement 9 wird nunmehr weiter gegen das Randteil 101 bewegt, so daß das Randteil 101 dadurch um die als Biegelinie dienende Schwächungszone 107 in die Lage des abgewinkelten Randes 101'klappt, wobei es sich gemäß Ausführungsbeispiel auf die Oberseite des Halters 13 legt (Fig. 9). Zur Durchführung dieses Arbeitsschrittes wird zusätzlich die gesamte Biegeeinheit 1 um die Achse 17 geringfügig gegenüber der in Fig. 8 dargestellten Position verschwenkt.

Im Bereich der Schwächungszone 107 wird dem Formteil-Rohling 102 sodann Wärme entzogen, damit der Werkstoff 106 dort wieder seine ursprüngliche Festigkeit erhält und das Randteil 101 in seiner abgewinkelten Lage dauerhaft fixiert ist.

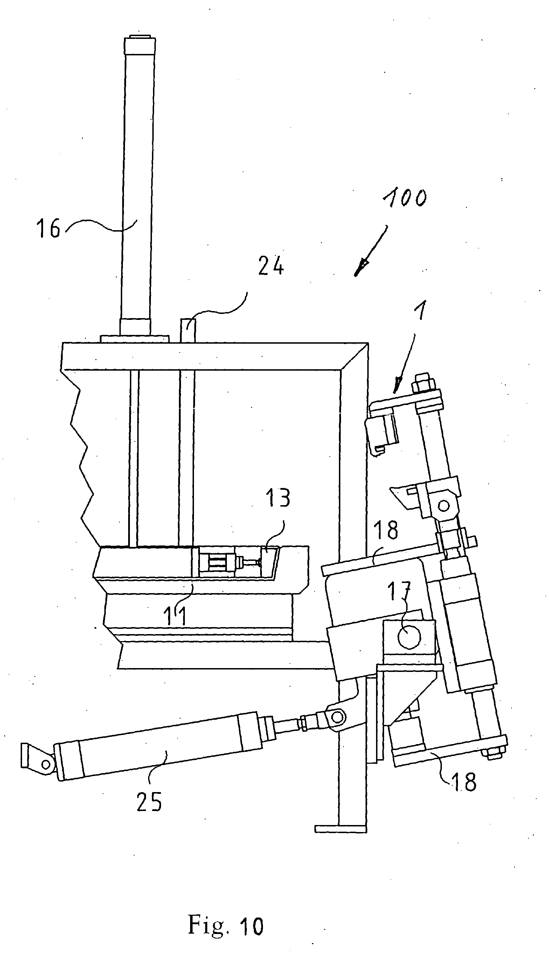

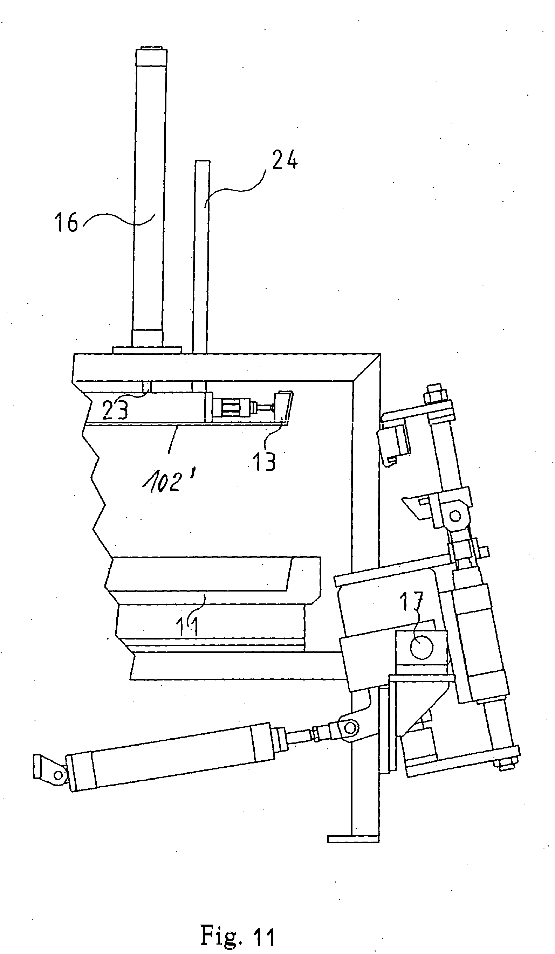

Sodann wird die Biegeeinheit 1 gemäß Fig. 10 in ihre Ruhelage zurückgeschwenkt und schließlich wird das fertiggestellte Formteil 102`gemäß Fig. 11 aus der Form 11 herausgehoben. Durch Zurückfahren der Halter 13 wird das Formteil 102`schließlich freigegeben.

Weitere Einzelheiten des Rand-Abwinkel- bzw. Umbördel-Verfahrens, der dazu dienenden Maschinenteile und des sich ergebenden Produktes gehen aus den Figuren 12 bis 16 hervor.

Mit Hilfe der als Prägewerkzeug dienenden, beheizbaren Elemente 8 wird jeweils zunächst der Querschnitt des Werkstoffes 106 der Formteil-Rohlinge 102 bzw. 104 im randnahen Bereich längs einer linien-, bzw. rillen- oder kanalförmigen Schwächungszone 107 ( Fig. 13 b ) oder längs zweier linien-, bzw. rillen- oder kanalförmigen Schwächungszonen 108 und 109 ( Fig. 12 b ) mit Hilfe von Wärme und ausreichendem Druck verringert bzw. reduziert. Die Schwächungszonen 107 bis 109 dienen jedoch nicht nur als Biegelinien, sondern auch zur Schaffung von zwei winklig oder keilförmig zueinander stehenden Begrenzungsflächen 110 und 111 gemäß dem ersten Ausführungsbeispiel ( Fig. 13 a bis 13 c) ) bzw. zur Schaffung von vier im Querschnitt winklig zueinander stehenden Begrenzungsflächen 112 bis 113 bzw. 114 und 115 gemäß dem zweiten Ausführungsbeispiel ( Fig. 12 a bis 12 d ).

Nach Herstellung der Schwächungszonen 107 bzw. 108 und 109 werden das Randteil 101 gemäß ( Fig. 13 a ) bzw. es werden die Randstücke 103` und 103`` des Randteiles 103 gemäß Fig. 12 c mit Hilfe des als

Drückwerkzeug dienenden Drückelementes 9, 9` abgewinkelt oder umgebogen bzw. umgebördelt. Dabei werden die jeweils zusammen gehörenden und eine keilförmige Schwächungszone 107 bzw. 108 bzw. 109 bildenden Begrenzungsflächen 110 und 111 bzw. 112 und 113 bzw. 114 und 115 aufeinander gedrückt. Gleichzeitig werden die zu den kanaiförmigen Schwächungszonen 107 bzw. 108 und 109 gehörenden Begrenzungsflächen 110 und 111 bzw. 112 und 113 bzw. 114 und 115 paarweise miteinander verbunden, da der thermoplastische Werkstoff 106 oder thermoplastische Werkstoffanteile im Werkstoff 106 bei ausreichender Wärmezufuhr Schmelzklebeeigenschaften besitzen.

Nach dem Verbinden wird Wärme dem Werkstoff 106 mindestens im Bereich der Schwächungszone/Biegelinien entzogen. Durch diesen Wärmeentzug erhält der Werkstoff 106 wieder seine normale Festigkeit und der abgewinkelte Rand 101` des Formteiles 102`(Fig. 13 c ) bzw. der umgebördelte Rand 103```des Formteiles 104`(Fig. 12 d ) sind in der neuen, erwünschten Lage fixiert und weisen die notwendige Formstabilität auf.

Zum Erzeugen der Linien oder Rillen bzw. kanalförmigen Schwächungszonen 107 ist das beheizbare Element 8 in Gestalt einer Prägeelektrode vorgesehen. Dieses beheizbare Element 8 weist eine Schneide 116 auf, die von zwei spitzwinklig zueinander stehenden Schneidfasen 117 und 118 begrenzt wird. Die Schneidfasen 117 und 118 definieren die Lage der Begrenzungsflächen 110 und 111 im Werkstoff 106 des Formteil-Rohlings 102.

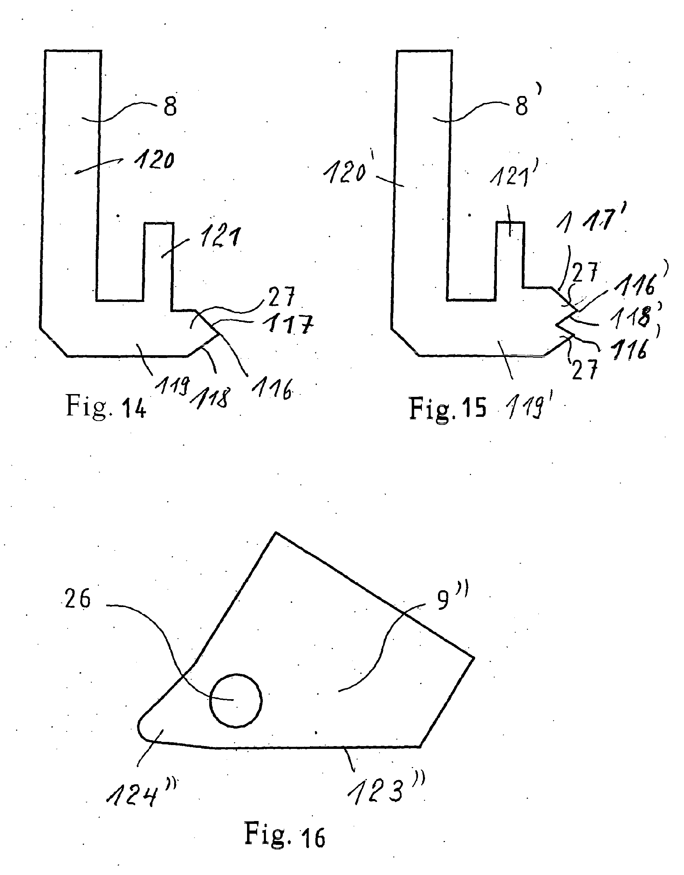

Die Schneide 116 erstreckt sich mit ihren Schneidfasen 117 und 118 entweder weitgehend geradlinig oder ggf. längs einer Raumkurve entsprechend der gewünschten Form und Gestalt des herzustellenden Formteiles 102`. Im wesentlichen ist das beheizbare Element 8 im Querschnitt L -förmig (Fig. 13 b, Fig. 14). Die Schneide 116 befindet sich am freien Ende des kurzen Schenkels 119. Der kurze Schenkel 119 trägt ferner parallel zum langen Schenkel 120 ein Haltestück 121. Zwischen dem langen Schenkel 120 und dem Haltestück 121 befindet sich ein in den Figuren nicht dargestelltes Heizelement z.B. in Gestalt einer elektrischen Widerstandsheizung, um die Prägeelektrode in genau definiertem Maße zu erwärmen. Die jeweils benötige Temperatur hängt von der Art des zu bearbeitenden Werksstoffes/Kunststoffes ab und liegt in der Regel in der Größenordnung zwischen 160 ° und 300 °.

Beim Erzeugen der Schwächungszone 107 stützt sich der Formteil-Rohling 102 an der Form 11 als Gegenwerkzeug für das beheizbare Element 8 ab, wobei der Randteil 101 des Formteil-Rohlings 102 über eine Fläche 122 (Fig. 13 a ) der Form 11 ragt. Die gemäß Fig. 13 b geschaffene Schwächungszone 107 liegt etwa in der Ebene der Fläche 122 . Der Fläche 122 ist eine freie Randfläche der Form 11, wie auch Fig. 3 zeigt.

Auf der Fläche 122 ist das als Schieber gestaltete Drückelement 9 (Fig. 13 a, 13 c ) quer zu dem Randteil 101 und der Schwächungszone 107 bewegbar. Das Drückelement 9 weist eine auf der Fläche 122 liegende Gleitfläche 123 und an seinem einen Ende eine Drücknase 124 auf. Die Gleitfläche 123 geht bogenflörmig im Bereich der Drücknase 124 in eine spitzwinklig zur Gleitfläche 123 stehende Fläche 125 über.

Gemäß dem in Fig. 16 dargestellten Ausführungsbeispiel ist die Drücknase 124 `` des Drückelementes 9`` etwas gegenüber der Gleitfläche 123`` angehoben.

Beim Verschieben des Drückelementes 9 oder 9`` aus der Position gemäß den Fig. 13 a und 13 b in die Position gemäß Fig. 13 c wird das freie Randteil 101 in der Bewegungsrichtung des Drückelementes 9 um die als Biegelinie dienende Schwächungszone 107 abgewinkelt, so daß die Begrenzungsflächen 110 und 111 aufeinander zu liegen kommen (Fig. 13 c) und miteinander verschweißen.

Zum Erzeugen von zwei parallelen Schwächungszonen 108 und 109 gemäß dem zweiten Ausführungsbeispiel (Fig. 12 a bis 12 d) weist das beheizbare Element 8` (Fig. 15 ) zwei parallel zueinander angeordnete Schneiden 116` und entsprechend Jeweils zwei Schneidfasen 117` und zwei Schneidfasen 118 ` auf.

Alle übrigen Merkmale wie der im Querschnitt kurze Schenkel 119`, der im Querschnitt lange Schenkel 120` oder das Haltestück 121'für eine elektrische Widerstandsheizung stimmen mit den entsprechenden Merkmalen des zuerst beschriebenen Elementes 8 überein.

Das zu dem beheizbaren Element 8` gehörende Drückelement 9'(Fig. 12 a bis 12 d) weist zwei Gleitflächen 131` und 132` auf unterschiedlichem Niveau sowie versetzt zueinander auf. Dadurch werden im Querschnitt zwei Drücknasen 133` und 134` geschaffen.

Die Gleitfläche 131` verbindet die eine, in einer ersten Bewegungsrichtung des schieberartigen Drückelementes 9` vorne liegende Drücknase 133` (Fig. 12 ) und die andere, hinten liegende Drücknase 134`, die bei einer Rückwärtsbewegung des Drückelementes 9'vorne liegt.

Zum Umbördeln des mit Schächungszonen 108 und 109 versehenen Formteil-Rohlings 104 gemäß (Fig. 12 a - 12 d ) bewegt sich das Drükkelement 9'zunächst mit seiner Gleitfläche 131` auf der freien Randfläche 122 der Form 11 und winkelt das Randteil 103 in die Positionen der Randstücke 103` und 103`` ab. Dabei bewegt sich das Drückelement 9` in einer ersten Arbeitsrichtung gemäß dem Pfeil A. Sobald sich die Nase 134` über die Schwächungszone 108 (Fig. 12 c ) bewegt hat, bewegt sich das Drückelement 9`quer zur ersten Arbeitsrichtung in einer zweiten Arbeitsrichtung gemäß dem Pfeil B (Fig. 12 c) und winkelt dabei das freie Randstück 103` in einer Richtung entsprechend dem Pfeil B ab. Sodann bewegt sich das Drückelement 9'zurück und parallel zur ersten Arbeitsrichtung in einer dritten Arbeitsrichtung entsprechend dem Pfeil C (Fig. 12 d), wobei das freie Randstück 103` auf das Randstück 103`` gedrückt und die Begrenzungsflächen der Schwächungszonen 108 und 109 aufgrund der zugeführten Wärme (gemäß dem Werkstoff auf eine Temperatur zwischen 160 ° C und 300° C) und aufgrund der Schmelzklebeeigenschaften des Werkstoffes nicht nur lagegenau in innigen Kontakt miteinander gebracht werden und miteinander verschmelzen, sondern durch zeitgenaues Abkühlen schließlich aneinander fixiert werden. Das Abkühlen erfolgt mit Hilfe von Kühlmittel, für das Kühlkanäle 26 in den Drückelementen 9`, 9``bzw. auch in dem Rand 105 der Form 11 ebenso vorgesehen sind wie im Falle des zuerst beschriebenen Ausführungsbeispieles.

Die Arbeitsschritte gemäß den Pfeilen A, B und C erfordern sehr kleine Bewegungen (Hubbewegungen) der Antriebe 19, 22 bzw. 25, wobei der Arbeitsschritt entsprechend dem Pfeil B durch ein geringfügiges Verschwenken der Biegeeinheit 1 um die Achse 17 entgegen dem Uhrzeigersinn in den Fig. 3 ff. erzielt wird.

Die beiden Drücknasen 133` und 134` werden begrenzt einerseits von der Gleitfläche 131` und andererseits von der Fläche 125` bzw. von einer Fläche 135`, die in die Gleitfläche 132` übergeht.

Der Werkstoff 106 enthält thermoplastischen Kunststoff, so daß er mit Wärme und Druck thermoplastisch verarbeitbar ist und bei Erwärmung Schmelzklebeeigenschaften besitzt. Er kann mehrlagig sein, wobei eine Lage als Armierung dienende Trageschicht 128 (Fig. 12 a und Fig. 13 a, 13 c) vorgesehen ist. Die Schwächungszonen 107 bis 109 erstrecken sich zweckmäßigerweise bis in die Trageschicht 128 hinein, die thermoplastischen Kunststoff enthält und deren Querschnitt wenigstens zum Teil mit einer Schwächungszone versehen ist.. Zum Erzeugen einer derartigen Schwächungszone werden die Schneiden 116 bzw. 116` gegebenenfalls mit einem Trenn- und Stanzdruck beaufschlagt.

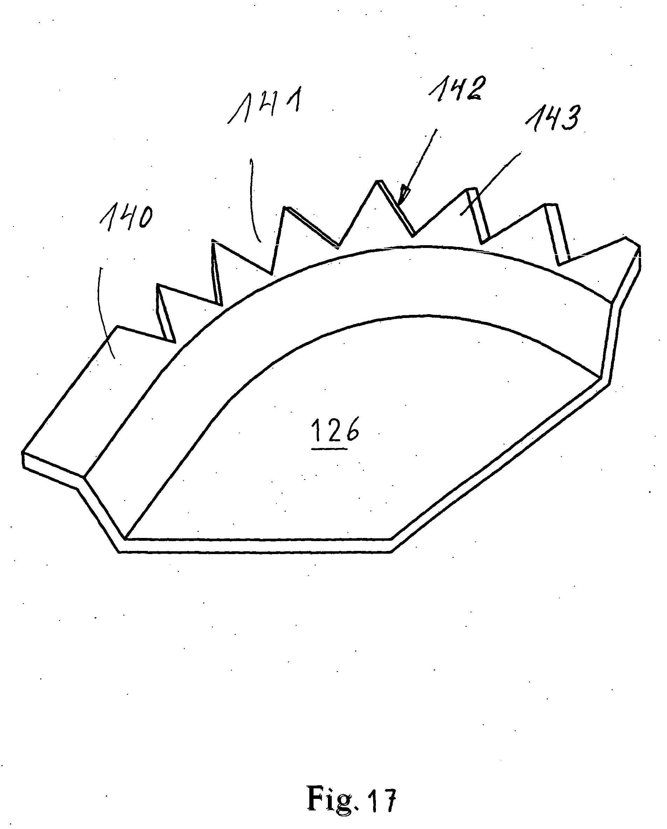

Grundsätzlich können Randteile 140 eines Formteil-Rohlings 126 gemäß Fig. 17 auch bogenförmig sein. In einem solchen Fall erhalten derartige Randteile 140 vor der Randbearbeitung mehrere Ausnehmungen 141, so daß der zu bearbeitende Rand 142 aus einer Vielzahl einzelner Vorsprünge 143 besteht. Zweckmäßigerweise sind die Ausnehmungen 141 und die Vorsprünge 143 jeweils dreieckig. Sie können aber auch trapezförmig oder ähnlich gestaltet sein.

Ergänzend zeigt schließlich Fig. 1 zwei bogenförmige, innere Körperkanten 127 eines Formteil-Rohlings 126 im Bereich der beiden Biegeeinheiten 1 und 5. Entsprechend bogenförmig sind auch die im Bogenbereich angepaßten, beheizbaren Elemente 8 und Drückelemente 9.

## Patentansprüche

1. Verfahren zum Herstellen des freien Randes ( 101`, 103` ` eines selbsttragenden, dünnwandigen Formteiles (102`, 104` ), insbesondere eines thermoplastischen Kunststoff enthaltenden, durch Warmumformung herstellbaren, mehrlagigen Innenverkleidungsteiles für Kraftfahrzeuge, wobei die Randgestaltung durch Abwinkeln und/oder Umbördeln von mindestens einem Randteil ( 101, 103 ) des nahezu fertiggestellten Formteiles ( 102`, 104`) /Formteil-Rohlings (102, 104 ) erfolgt, **dadurch gekennzeichnet,**
**daß** der Querschnitt des Werkstoffes (106 ) des Formteil- Rohlings ( 102, 104 ) zunächst im randnahen Bereich zur Bildung von mindestens einem Randteil ( 101, 103 ) linienförmig mit Hilfe von Wärme verringert wird und
**daß** das Randteil (101, 103 ) sodann längs 'mindestens einer schmalen, linienförmigen Schwächungszone (107, 108, 109), /Biegelinie mindestens einmal mechanisch abgewinkelt
und schließlich durch Entziehen von Wärme fixiert wird.

2. Verfahren nach Anspruch 1, **dadurch gekennzeichnet,**
**daß** der Querschnitt des Werkstoffes ( 106 ) des Formteil-Rohlings ( 104 ) im Randbereich längs zweier, linienförmiger Schwächungszonen ( 108, 109 ), die im wesentlichen parallel zueinander sowie im Abstand voneinander angeordnet sind, zur Bildung eines ersten, streifenförmigen Randstückes ( 103` ) und eines zweiten, streifenförmigen Randstückes ( 103``) verringert wird
und **daß** die Randstücke ( 103`, 103``) sodann jeweils längs der beiden schmalen, linienförmigen Schwächungszonen ( 108, 109 ) abgewinkelt
und durch Entziehen von Wärme fixiert werden.

3. Verfahren nach Anspruch 1 oder 2, **dadurch gekennzeichnet,**
**daß** die Werkstoffreduzierung durch örtliches Entfernen von Werkstoff erfolgt.

4. Verfahren nach Anspruch 1 oder 2, **dadurch gekennzeichnet,**
**daß** die Werkstoffreduzierung durch Wegschmelzen von Werkstoff erfolgt.

5. Verfahren nach Anspruch 1 oder 2, , **dadurch gekennzeichnet,**
**daß** die Werkstoffreduzierung durch Werkstoffverdrängung erfolgt.

6. Verfahren nach Anspruch 1 oder 2, **dadurch gekennzeichnet,**
**daß** die Werkstoffreduzierung im Bereich der linienförmigen Schwächungszone/Schwächungszonen ( 107, 108, 109 ) durch Erzeugung eines offenen, im Querschnitt dreieckigen Kanals /Rille erfolgt.

7. Verfahren nach Anspruch 1 oder 2, **dadurch gekennzeichnet,**
**daß** die Verringerung des Querschnitts mit Hilfe von Wärme und Druck erfolgt.

8. Verfahren nach Anspruch 1 oder 2, **dadurch gekennzeichnet,**
**daß** im Falle der Bearbeitung eines eine Trageschicht ( 128 ) aufweisenden, mehrlagigen Formteil-Rohling ( 102, 104 ) der Querschnitt der Trageschicht ( 128 ) mindestens zum Teil linienförmig verringert wird.

9. Verfahren nach Anspruch 1 oder 2, **dadurch gekennzeichnet,**
**daß** die Fixierung des abgewinkelten/oder umbogenen Randteiles/der Randteile (101, 103 ) im Bereich der Schwächungszone (107, 108, 109 ) durch Anschmelzen, Andrücken und Abkühlen von Begrenzungsflächen ( 110, 111 bzw. 112 und 113 bzw. 114 und 115) erfolgt, die bei der Verringerung des Werkstoffes die rillenförmige oder kanalförmige Schwächungszone (107, 108, 109 ) bilden.

10. Verfahren nach Anspruch 1 oder 2, **dadurch gekennzeichnet,**
**daß** ein Randteil ( 103 ) zunächst mit Hilfe von zwei linienförmigen Schwächungszonen (108, 109 ) in zwei streifenförmige Randstücke ( 103` und 103`` ) unterteilt und sodann ein Randstück ( 103`) um 90 ° abgewinkelt und ein Randstück (103`` ) um 180 ° umgebördelt wird.

11. Verfahren nach Anspruch 1 oder 2, **dadurch gekennzeichnet,**
**daß** zum Umbördeln ein schieberartiges Drückelement ( 9`) verwendet wird, das zunächst in einer ersten Arbeitsrichtung (A ), sodann quer dazu in einer zweiten Arbeitsrichtung ( B ) und schließlich zurück und parallel zur ersten Arbeitsrichtung ( A ) in einer dritten Arbeitsrichtung ( C ) bewegt wird.

12. Verfahren nach Anspruch 1 oder 2, **dadurch gekennzeichnet, daß** die Schwächungszone (107, 108, 109 ) gleichzeitig sowie zusätzlich mit Hilfe von Trenn- oder Stanzdruck erzeugt wird.

13. Vorrichtung zur Durchführung des Verfahrens nach mindestens
einem der Ansprüche 1 oder 2 mit einer den Formteil-Rohling ( 102, 104 ) tragenden Herstellungsform ( 11) sowie mit einer Einrichtung zum mechanischen Abwinkeln oder Umbördeln von mindestens einem Randteil ( 101, 103 ) des Formteil-Rohlings (102, 104 ), wobei ferner mindestens ein bewegbarer Halter ( 13 ) zum Halten des Formteil-Rohlings ( 102, 104 ) in der zum Herstellen dienenden Form ( 11) vorgesehen ist, **dadurch gekennzeichnet,**
**daß** mindestens ein bewegbar angeordnetes, beheizbares Element ( 8, 8` ) zum Erzeugen von mindestens einer randnahen, linien- bzw. rillenförmigen Schwächungszone ( 107, 108, 109 ) im Formteil-Rohling ( 102, 104 ) und mindestens ein bewegbar angeordnetes Drückelement ( 9, 9`, 9`` ) zum Abwinkeln /Umbördeln vorgesehen sind.

14. Vorrichtung nach Anspruch 13, **dadurch gekennzeichnet,**
**daß** das beheizbare Element ( 8, 8` ) eine elektrisch beheizbare Prägeelektrode ist.

15. Vorrichtung nach Anspruch 13, **dadurch gekennzeichnet,**
**daß** das beheizbare Element ( 8, 8` ) mindestens eine Schneide ( 116, 116` ) mit im Querschnitt spitzwinklig zueinander stehenden Schneidfasen ( 117, 118 bzw. 117`, 118` ) aufweist.

16. Vorrichtung nach Anspruch 13, **dadurch gekennzeichnet,**
**daß** das beheizbare Element ( 8` ) zwei im Abstand voneinander angeordnete Schneiden ( 116` ) mit je im Querschnitt spitzwinklig zueinander stehenden Schneidfasen ( 117`, 118` ) aufweist.

17. Vorrichtung nach Anspruch 13, **dadurch gekennzeichnet**
**daß** das Drückelement ( 9, 9` ) schieberartig ist und mindestens eine Gleitfläche (123, 131`und 132`) und mindestens eine spitzwinklig dazu stehende zweite Fläche ( 125, 125` bzw. 135` ) aufweist, die im Querschnitt bogenförmig ineinander übergehen.

18. Vorrichtung nach Anspruch 13, **dadurch gekennzeichnet,**
**daß** das schieberartige Drückelement ( 9 ) eine Drücknase ( 124 ) zwischen der Gleitfläche ( 123 ) und der zweiten Fläche ( 125 ) aufweist.

19. Vorrichtung nach Anspruch 13, **dadurch gekennzeichnet,**
**daß** das schieberartige Drückelement (9 `) zwei Drücknasen ( 133`, 134 ` ) und zwei Gleitflächen ( 131`, 132` ) aufweist.

20. Vorrichtung nach Anspruch 19, **dadurch gekennzeichnet,**
**daß** das schieberartige Drückelement ( 9` ) in einer ersten Arbeitsrichtung ( A ), sodann quer dazu in einer zweiten Arbeitsrichtung ( B ) und schließlich zurück und parallel zur ersten Arbeitsrichtung ( A ) in einer dritten Arbeitsrichtung ( C ) bewegbar ist.

21. Vorrichtung nach Anspruch 15 oder 16, **dadurch gekennzeichnet,**
**daß** das mindestens eine Schneide ( 116, 116` ) aufweisende, beheizbare Element ( 8, 8`) zugleich mit Druck für einen mechanischen Trennschnitt beaufschlagbar ist.

22. Vorrichtung nach Anspruch 13, **dadurch gekennzeichnet,**
**daß** jeweils mindestens ein bewegliches, beheizbares Element ( 8, 8` ) und ein bewegbares Drückelement ( 9, 9` ) und ihre Antriebe ( 19, 22, 25 ) eine Biegeeinheit ( 1 bis 6 ) bilden.

23. Vorrichtung nach Anspruch 13, **dadurch gekennzeichnet,**
**daß** das beheizbare Element ( 8, 8`)/die Prägeelektrode im Querschnitt L-förmig ist, wobei sich die Schneide ( 116 bzw. 116` ) am freien Ende des kurzen Schenkels ( 119 , 119`) befindet.

24. Formteil, insbesondere selbsttragendes sowie dünnwandiges, mehrlagiges Innenverkleidungsteil für Kraftfahrzeuge, das thermoplastischen Kunststoff als Werkstoff ( 106 ) enthält, wobei der Formteil-Rohling ( 102, 104 ) bei ausreichender Erwärmung thermoplastische Klebeeigenschaften aufweist, mit einem freien Rand ( 101`, 103```), der aus einem abgewinkelten Randteil ( 101 ) oder aus einem aus zwei Randstücken ( 103`, 103` ` ) bestehenden , umgebördelten Randteil ( 103 ) gebildet ist, wobei der Werkstoff ( 106 ) im randnahen Bereich mindestens eine linienförmige- oder kanalförmige Schwächungszone ( 107 bzw. 108, 109 ) jeweils mit Begrenzungsflächen (110 und 111 bzw. 112 und 113 bzw. 114 und 115 ) aufweist, die thermoplastisch miteinander verschweißt sind.
